Europäisches Patentamt

European Patent Office

Office européen des brevets

(11) Numéro de publication: **0 430 725 A1**

# DEMANDE DE BREVET EUROPEEN

(21) Numéro de dépôt: 90402975.8

(51) Int. Cl.5: **B60K 17/346**

(22) Date de dépôt: 23.10.90

(30) Priorité: 24.11.89 FR 8915464

(43) Date de publication de la demande:
05.06.91 Bulletin 91/23

(84) Etats contractants désignés:
DE ES GB IT Bulletin 2

(71) Demandeur: REGIE NATIONALE DES USINES
RENAULT
Boîte postale 103 8-10 avenue Emile Zola
F-92109 Boulogne-Billancourt(FR)

(72) Inventeur: Buannec, Michel
65, rue du Tir
F-92000 Nanterre(FR)
Inventeur: Fievet, Serge
27 Bis, Avenue Henri Barbusse
F-78360 Montesson Laborde(FR)

(74) Mandataire: Ernst-Schonberg, Michel et al
REGIE NATIONALE DES USINES RENAULT (S.
0267) 8 & 10, avenue Emile Zola
F-92109 Boulogne Billancourt Cédex(FR)

(54) **Différentiel central.**

(57) Différentiel central de répartition de couple entre les deux essieux d'un véhicule automobile, comportant un dispositif de répartition de couple de rapport fixe avec un ensemble (4) de couronne d'entrée de mouvement et un ensemble (5) de couronne de sortie de mouvement caractérisé en ce que :
- l'ensemble (4) de la couronne d'entrée de mouvement est monté dans le carter (6) dudit différentiel par l'intermédiaire d'un roulement à rouleaux coniques (1) ;
- l'ensemble (5) de la couronne de sortie de mouvement est monté dans le carter (6) dudit différentiel par l'intermédiaire d'un roulement à rouleaux coniques (3) ;
- l'ensemble (4) de la couronne d'entrée et l'ensemble (5) de la couronne de sortie étant monté l'un par rapport à l'autre par l'intermédiaire d'un roulement à rouleaux coniques (2) ;

**FIG. 2**

## DIFFERENTIEL CENTRAL

La présente invention se rapporte à un différentiel central de répartition de couple entre les deux essieux d'un véhicule automobile.

La plupart des différentiels existants de ce type font appel à une architecture reposant sur un ensemble de quatre roulements :

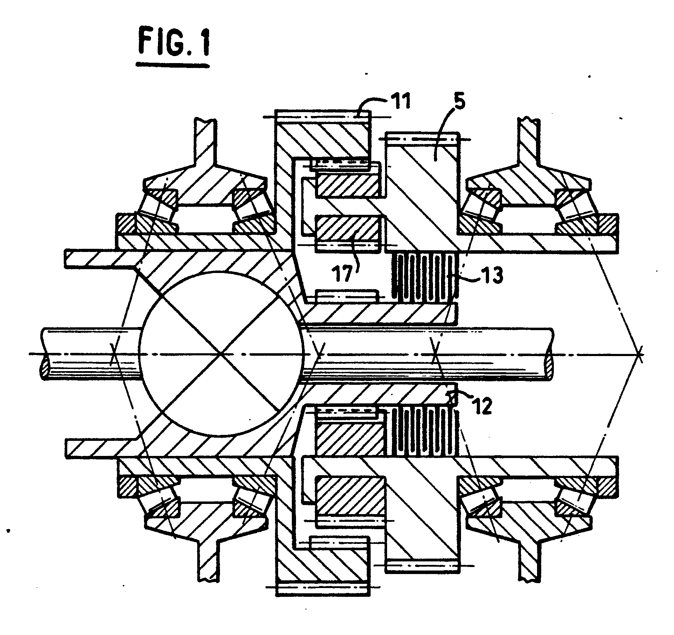

Un premier groupe de deux roulements montés dans le carter supportent l'ensemble d'entrée de mouvement tandis qu'un deuxième groupe de deux roulements montés également dans le carter supportent l'ensemble de sortie de mouvement. La figure 1 représente un différentiel de ce type qui présente l'inconvénient d'être relativement encombrant et de charger les roulements en porte-à-faux. De plus cette complication de montage entraîne un prix de revient assez élevé.

Le but de la présente invention est de proposer un différentiel central de répartition de couple entre les deux essieux d'un véhicule automobile, qui permette d'obtenir une structure plus compacte avec une meilleure répartition des charges.

Selon un mode de réalisation de l'invention, le différentiel central de répartition de couple entre les deux essieux d'un véhicule automobile comporte un dispositif de répartition de couple de rapport fixe avec un ensemble (4) de couronne d'entrée de mouvement et un ensemble de couronne de sortie de mouvement.

L'ensemble de la couronne d'entrée de mouvement est monté dans le carter dudit différentiel par l'intermédiaire d'un roulement à rouleaux coniques ; l'ensemble de la couronne de sortie de mouvement est monté dans le carter différentiel par l'intermédiaire d'un roulement à rouleaux coniques ; l'ensemble de la couronne d'entrée et l'ensemble (5) de la couronne de sortie étant monté l'un par rapport à l'autre par l'intermédiaire d'un roulement à rouleaux coniques ; les deux premiers roulements à rouleaux coniques étant montés de façon que la petite base des rouleaux coniques soient dirigés vers l'extérieur du carter.

La présente invention présente ainsi l'avantage d'avoir un montage de l'ensemble du différentiel plus court dans le sens axial, sans augmenter l'encombrement radial.

Cet encombrement réduit est extrêmement avantageux dans les architectures modernes des véhicules automobiles. De plus, le montage selon l'invention est moins cher, car il fait appel à moins de roulements, qui sont ainsi mieux disposés et moins soumis à effort ; ce qui augmente leur longévité.

D'autres caractéristiques et avantages de la présente invention ressortiront de la description qui suit le mode de réalisation donné, à titre d'exemple, en référence aux dessins annexés sur lesquels :

- la figure 2 est une vue en coupe axiale de l'ensemble du différentiel central selon l'invention ;
- la figure 3 est une vue en coupe axiale analogue à la figure 2 d'un autre mode de réalisation de l'invention ;
- la figure 4 est une vue en coupe axiale analogue à la figure 2 d'un autre mode de réalisation de l'invention ;
- la figure 5 est une vue en coupe axiale analogue à la figure 2 d'un autre mode de réalisation de l'invention.

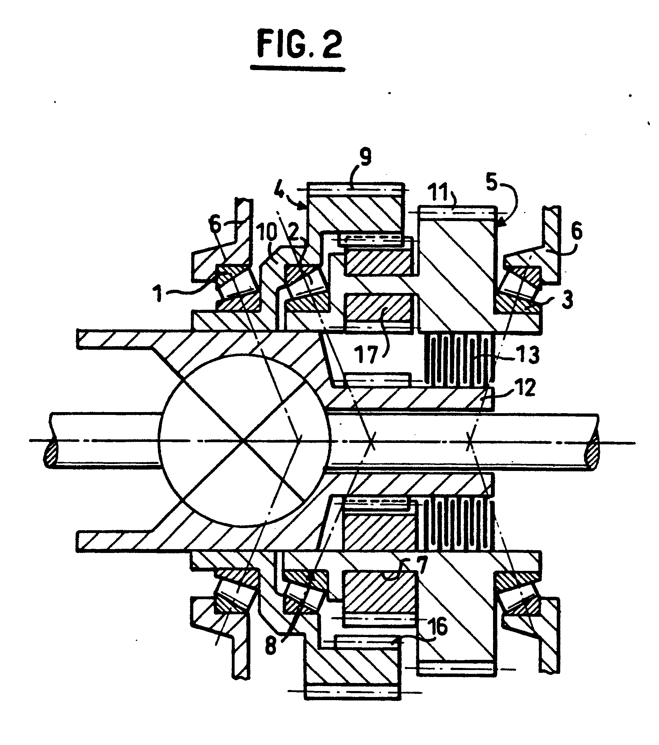

Le différentiel central de répartition de couple entre les deux essieux d'un véhicule automobile, selon l'invention, est représenté sur la figure 2. Ce différentiel comprend un dispositif de répartition de couple de rapport fixe qui possède un ensemble référence 4 de couronne 9 d'entrée de mouvement, un ensemble référence 5 de couronne 11 de sortie de mouvement, ainsi qu'un train épicycloïdal disposé entre ces deux ensembles 4 et 5.

Le train épicycloïdal est constitué d'une couronne 16 interne solidaire de la couronne 9 d'entrée de mouvement et d'un planétaire 12, qui engrène avec ladite couronne 9 par l'intermédiaire de satellites 17 supportés par un porte-satellites 7. Le porte-satellites 7 est solidaire de la couronne 11 de sortie de mouvement et possède une extrémité 7, afin de constituer l'ensemble 5 de couronne de sortie de mouvement.

L'ensemble 4 de la couronne d'entrée de mouvement est monté dans le carter 6 du différentiel par l'intermédiaire d'un roulement à rouleaux coniques 1, qui est disposé sur l'extrémité 18 de la couronne d'entrée 9, et dans un logement dudit carter 6. L'ensemble 4 de la couronne 9 d'entrée de mouvement, comprend, outre ladite couronne 9, un moyeu 10 qui se prolonge par l'extrémité 8.

L'ensemble 5 de la couronne de sortie de mouvement est monté dans le carter 6 par l'intermédiaire d'un reulement à rouleaux coniques 3.

L'ensemble 4 de la couronne d'entrée 9 est montée sur l'ensemble 5 de la couronne de sortie 11 par l'intermédiaire d'un roulement à rouleaux coniques 2. Ce roulement 2 est disposé sur l'extrémité 8 du porte-satellite 7 de l'ensemble 5 de la couronne de sortie 11, et il est logé à l'intérieur du moyeu 10 de l'ensemble 4 de la couronne 9 d'entrée de mouvement.

Les roulements à rouleaux coniques 1 et 3 sont montés de façon que la petite base des rouleaux coniques soit dirigée vers l'extérieur du carter 6.

Le différentiel, selon l'invention, comprend en plus un dispositif de répartition de couple de rapport variable, qui coopère avec le dispositif de répartition de couple de rapport fixe. Ce dernier dispositif est disposé entre l'ensemble 5 de la couronne de sortie et le planétaire 12 de sortie de mouvement du dispositif de répartition de couple de rapport fixe. Le roulement à rouleaux coniques 2 a ses rouleaux coniques, qui sont orientés de la même manière que les rouleaux coniques du roulement 1.

Le dispositif de répartition de couple de rapport variable est constitué par un embrayage piloté 13. Dans une variante de réalisation non représentée sur la figure 2, le dispositif de répartition de couple de rapport variable est constitué par un visco-coupleur.

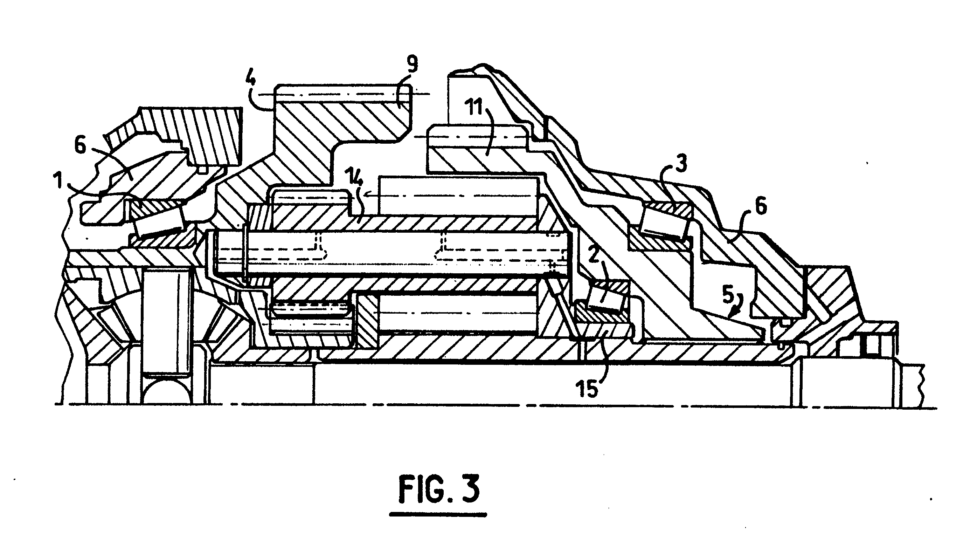

La figure 3 représente un autre mode de réalisation où le roulement à rouleaux coniques 2 est disposé sur l'extrémité 15 d'un boîtier 14, qui est solidaire de la couronne d'entrée de mouvement 9 de l'ensemble 4 ; et à l'intérieur de l'ensemble 5 de la couronne de sortie de mouvement 11.

Dans cette configuration, le roulement 2 a ses rouleaux coniques, qui sont orientés de la même manière que les rouleaux coniques du roulement 3.

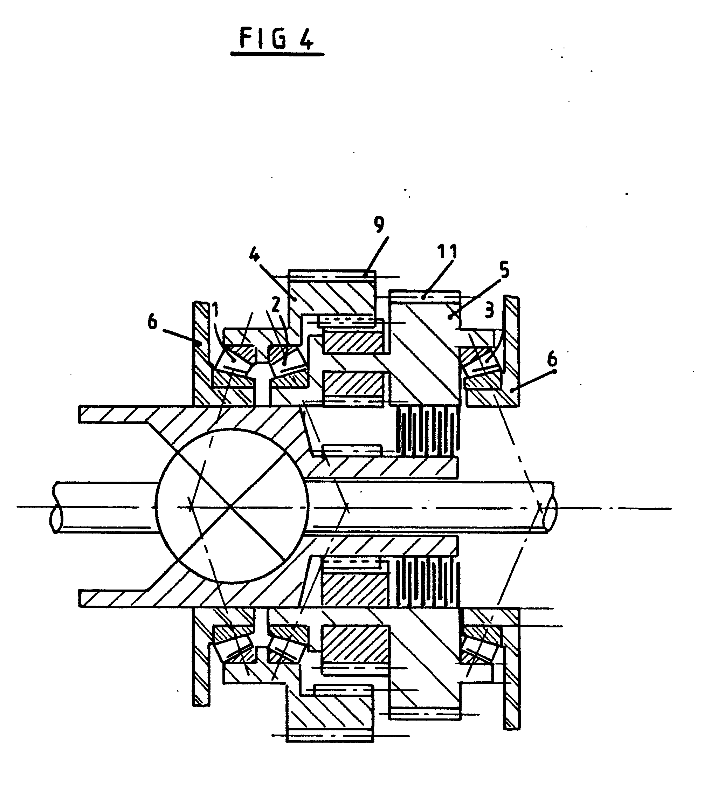

La figure 4 représente un autre mode de réalisation où les roulements à rouleaux coniques 1 et 3 sont orientés de telle manière que la petite base des rouleaux coniques soit dirigée vers l'intérieur du carter 6.

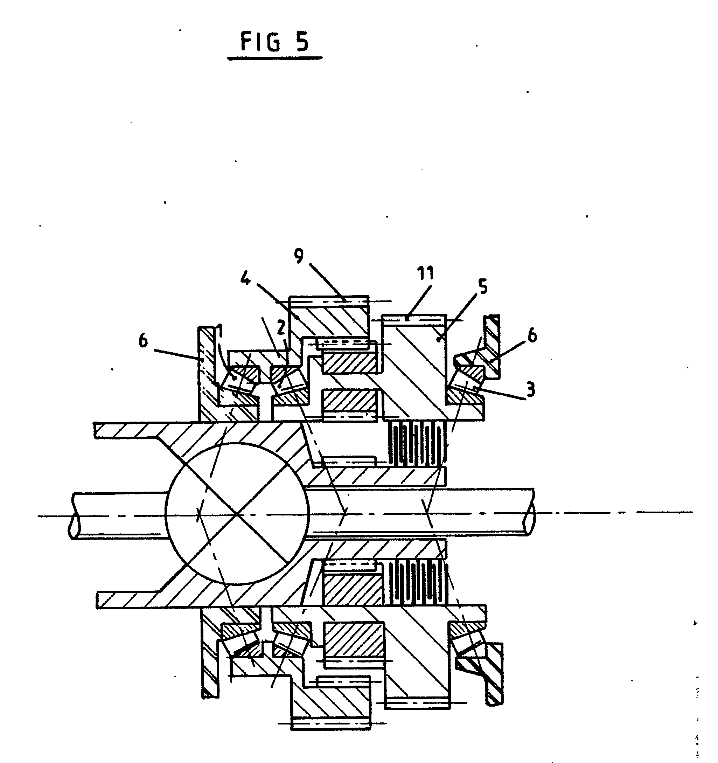

La figure 5 représente un autre mode de réalisation où:
- le roulement à rouleaux coniques 1 est orienté de telle manière que la petite base des rouleaux coniques soit dirigée vers l'intérieur du carter 6,
- le roulement à rouleaux coniques 3 est orienté de telle manière que la petite base des rouleaux coniques soit dirigée vers l'extérieur du carter 6,
- le roulement à rouleaux coniques 2 est orienté de telle manière que la petite base des rouleaux coniques soit dirigée à l'inverse de celles des roulements 1 et 3.

Un autre mode de réalisation consiste en l'utilisation de roulements capables de supporter un effort axial, mais ne relevant pas du domaine des roulements à rouleaux coniques. On citera pour exemple non limitatif les roulements à bille à contact oblique montés de manière à ce que la direction des efforts sur l'axe soit la même qu'avec lesdits roulements à rouleaux coniques.

**Revendications**

1°) Différentiel central de répartition de couple entre les deux essieux d'un véhicule automobile, comportant un dispositif de répartition de couple de rapport fixe avec un ensemble (4) de couronne d'entrée de mouvement et un ensemble (5) de couronne de sortie de mouvement caractérisé en ce que :
- l'ensemble (4) de la couronne d'entrée de mouvement est monté dans le carter (6) dudit différentiel par l'intermédiaire d'un roulement à rouleaux coniques (1) ;
- l'ensemble (5) de la couronne de sortie de mouvement est monté dans le carter (6) dudit différentiel par l'intermédiaire d'un roulement à rouleaux coniques (3) ;
- l'ensemble (4) de la couronne d'entrée et l'ensemble (5) de la couronne de sortie étant monté l'un par rapport à l'autre par l'intermédiaire d'un roulement à rouleaux coniques (2) ;

2°) Différentiel selon la revendication 1 caractérisé en ce que le roulement (2) est disposé sur l'extrémité (8)du porte-satellites (7) de l'ensemble (5) de la couronne de sortie (11) et à l'intérieur du moyeu (10) de la couronne d'entrée (9).

3°) Différentiel selon la revendication 2 caractérisé en ce qu'il comprend un dispositif de répartition de couple de rapport variable coopérant avec le dispositif de répartiteur de couple de rapport fixe, et qu'il est disposé entre l'ensemble (5) de la couronne de sortie (11) et le planétaire (12) de sortie de mouvement du dispositif de répartiteur de couple de rapport fixe ; le roulement (2) ayant ses rouleaux coniques orientés de la même manière que ceux du roulement (1).

4°) Différentiel selon la revendication 3 caractérisé en ce que le dispositif de répartiteur de couple de rapport variable est caractérisé par un visco-coupleur.

5°) Différentiel selon la revendication 3 caractérisé en ce que le dispositif de répartition de couple de rapport variable est constitué par un embrayage piloté (13).

6°) Différentiel selon la revendication 1 caractérisé en ce que le roulement (2) est disposé sur l'extrémité (15) d'un boîtier (14) solidaire de la couronne d'entrée (9) de l'ensemble (4) et à l'intérieur de l'ensemble (5) de la couronne de sortie (11) de mouvement : ledit roulement (2) ayant ses rouleaux coniques orientés de la même manière que ceux du roulement (3).

7°) Différentiel selon l'une des revendications 1 à 6 caractérisé en ce que les roulements à rouleaux coniques (1) et (3) sont montés de façon que la petite base des rouleaux coniques soit dirigée vers l'extérieur du carter (6).

8°) Différentiel selon l'une des revendications 1 à 5 caractérisé en ce que les roulements à rouleaux coniques (1) et (3) sont montés de façon que la petite base des rouleaux coniques soit dirigée vers l'intérieur du carter (6).

9°) Différentiel selon l'une des revendications 1 à 5 caractérisé en ce que :

- le roulement à rouleaux coniques (1) est monté de façon que la petite base des rouleaux coniques soit dirigée vers l'intérieur du carter (6),
- le roulement à rouleaux coniques (3) est monté de façon que la petite base des rouleaux coniques soit dirigée vers l'extérieur du carter (6),
- le roulement à rouleaux coniques (2) est monté de façon que la petite base des rouleaux coniques soit dirigée à l'inverse de celles des roulements (1) et (3).

**10°)** Différentiel selon l'une quelconque des revendications précédentes caractérisé en ce que des roulements à billes à contact oblique sont montés en lieu et place des roulements à rouleaux coniques (1), (2) et (3).

## FIG. 1

# FIG. 2

FIG. 3

EP 0 430 725 A1

# FIG 4

## FIG 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 476 953 (NISSAN)<br>* colonne 4, ligne 62 - colonne 5, ligne 2; figure 2 * * colonne 5, lignes 20 - 27 * | 1,2,6,7 | B 60 K<br>17/346 |
| A | US-A-3 899 938 (CATERPILLAR TRACTOR COMPANY)<br>* le document en entier * | 1,3,5,9 | |
| A | EP-A-0 236 178 (REGIE NATIONALE DES USINES RE-NAULT)<br>* page 5, ligne 18 - page 8, ligne 22; figures 2, 3 * | 1,3,4 | |
| A | DE-C-3 600 874 (DAIMLER-BENZ)<br>* le document en entier * | 1,3,5 | |
| A | EP-A-0 043 806 (S.I.R.P.STUDI INDUSTRIALI REALIZZA-ZIONE PROTOTIPI)<br>* page 4, ligne 26 - page 5, ligne 2; figure 2 * * page 5, ligne 19 - page 5, ligne 25 * | 1,7 | |
| A | US-A-4 280 583 (MACK TRUCKS, INC.)<br>* colonne 4, ligne 21 - colonne 5, ligne 27; figure 2 * | 1,9 | **DOMAINES TECHNIQUES RECHERCHES (Int. Cl.5)** |
| A | US-A-4 589 304 (HONDA GIKEN KOGYO)<br>* le document en entier * | 1,10 | B 60 K<br>F 16 H |

Le présent rapport de recherche a été établi pour toutes les revendications

| Lieu de la recherche | Date d'achèvement de la recherche | Examinateur |
|---|---|---|
| La Haye | 28 février 91 | TOPP-BORN S. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

&: membre de la même famille, document correspondant